# EUROPEAN PATENT SPECIFICATION

(11) **EP 2 722 259 B1**
(45) Date of publication and mention of the grant of the patent: **08.08.2018**
(21) Application number: 12799720.3
(22) Date of filing: 06.06.2012
(51) Int. Cl.: B62D 55/265

(54) **IMPROVED DEVICE FOR TRACKED WHEEL WITH MAGNETIC BAND**
VERBESSERTE VORRICHTUNG FÜR EIN SPURRAD MIT EINEM MAGNETBAND
DISPOSITIF AMÉLIORÉ POUR ROUE DE CHENILLE AVEC BANDE MAGNÉTIQUE

(30) Priority: 16.06.2011 ES 201131015 P
(43) Date of publication of application: 23.04.2014
(73) Proprietor: Eliot Systems, S.L., 46250 L'Alcudia (ES)
(72) Inventor: MASIA PERALES, Jorge, E-46250 L'Alcudia (Valencia) (ES)
(74) Representative: Sanz-Bermell Martinez, Alejandro
(86) International application number: PCT/ES2012/070421
(87) International publication number: WO 2012/172139

(56) References cited:
- WO-A1-99/07489
- ES-A1- 2 276 631
- GB-A- 978 600
- JP-A- H07 227 080
- JP-A- 2004 148 893
- JP-U- H01 144 166
- US-A- 4 789 037
- US-A- 4 789 037
- US-A- 4 842 086
- US-A- 5 894 901

## Description

This invention relates to a device for attaching magnets in tracked wheels of robots with magnetic band that is specially designed for application in robots that work with metal surfaces.

### State of the prior art

Currently the magnetic band of the tracked wheels consists of the placing of magnets directly onto the same using screws or similar attaching elements.

The problem showing these magnetic bands is that when coming into contact with the metal surfaces produce scratches and damage the paint of the same. Document JP 2004 148893 A discloses the preamble of claim 1.

### Explanation of the invention

The device of the present invention solves the problem set out above allowing the magnetic band of a robot to come into contact with a metal surface without damaging or scratching the paint of the surface.

The device of the invention has a cavity accommodating a magnet of the magnetic band. This cavity is sufficiently deep to completely contain the magnet and to completely accommodate the element for attaching the magnet to the device so as to avoid that when the device comes into contact with the metal surface, the magnet or attaching element come into contact with such metal surface. The device of the invention is designed so that the distance between the magnet and the metal surface with which it works, allows the magnet to effect the necessary attraction over the metal surface.

The device of the invention is ready to be attached to the magnetic band of the track. Screws can be used to secure the device to the magnetic band.

The requirement of geometry that the device must comply is that it must have rounded edges that are in the direction perpendicular to the direction of movement of the magnetic band.

The device is made of plastic. It may be plastic of the type of PVC, nylon, Teflon, etc. As the device is made of a plastic material, it does not damage the metal surface when comes in contact with it.

The magnet is attached to the device by means of a screw or a similar attaching means.

The device comes into contact with the metal surface avoiding the direct contact of the screw and magnet with said surface.

It is utilized one device for each magnet placed in the magnetic band of the track. These devices must be placed along the entire surface of the magnetic band.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the drawings

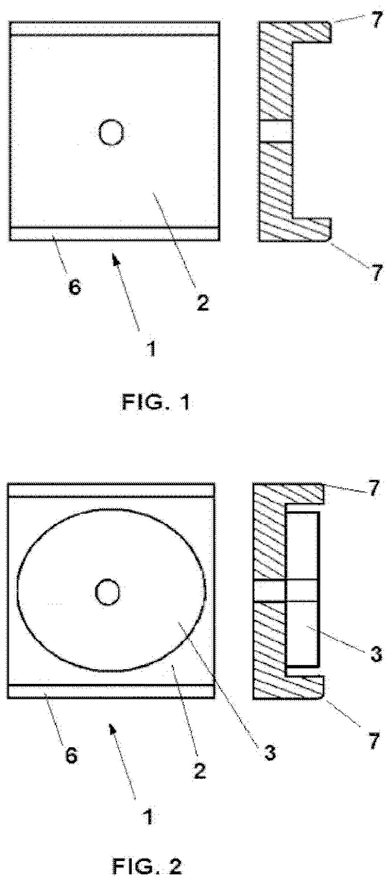

FIG. 1 shows the improved device for tracked wheel with magnetic band of the present invention.
FIG. 2 shows the assembly of the device of the invention with the magnet placed in it.

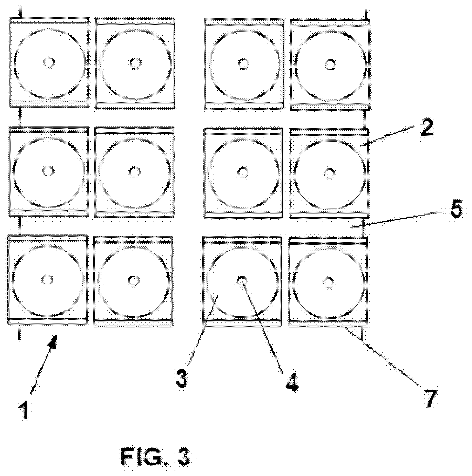

FIG. 3 shows a partial view of the magnetic band of the track with several devices installed on it.

### References:

1: Device; 2: Cavity; 3: Magnet; 4: Attaching element; 5: Magnetic band; 6: Edges; 7: Rounded edges

### Detailed description of embodiments

The improved device (1) for tracked wheel with magnetic band (5) of the present invention is designed to be used particularly in robots with tracked wheel with magnetic band (5) that works on metal surfaces.

The aim of the present invention is to provide a device to avoid that the magnet (3) and the element (4) for attaching the magnet (3) to the device (1) and to the magnetic band (5) come into contact with the metal surface on which the robot works in which it is incorporated. Damage to the metal surface or scratching of the paint of said the surface is thus avoided. To that end the magnet comprises a cavity (2) accommodating the magnet (3), this cavity (2) being sufficiently deep to completely accommodate the magnet (3) and an attaching element (4) that attaches the magnet to the device (1) and this to the magnetic band (5) leaving a gap between the upper surface of the magnet (3) and attaching element (4) and the upper surface of the device (1). The edges of the devices that are perpendicular to the direction of the movement of the magnetic band (5) are provided with rounded edges (7) in order to facilitate the contact with the metal surface when the tracked wheel moves.

The device (1) is made of a plastic material. Such plastic material may be PVC, nylon, etc. Since it is of plastic material, it does not damage the metal surface when comes into contact with it nor causes scratches in the paint of said surface.

## Claims

1. *Improved device (1) for tracked wheel with magnetic band (5) where a magnet (3) is accommodated in* a cavity of *said device,* whereby *the device is made of a plastic* material and comprises edges (6) that are perpendicular to the direction of movement of the magnetic band and the cavity (2) *is deep enough to* completely *accommodate the magnet (3),* **characterized in that** *said magnet (3)* is *attached to the device (1) and the device (1) to the magnetic band (5) by means of an attaching element (4), leaving a gap between the upper surfaces of the magnet (3) and the attaching element (4)* thereof *and the upper surface of the device (1), in such a way that the magnet (3) and attaching element (4) cannot come into contact with a metal surface on which the device moves, and **in that***
*at least the edges (6) of the device (1) that are perpendicular to the direction of movement of the magnetic band (5) are* provided with *rounded edges (7).*

## Patentansprüche

1. Verbesserte Vorrichtung (1) für ein Spurrad mit einem Magnetband (5), bei der ein Magnet (3) in einem Hohlraum der Vorrichtung aufgenommen ist, wobei die Vorrichtung aus einem Kunststoffmaterial hergestellt ist und Kanten (6) umfasst, die senkrecht zu der Bewegungsrichtung des Magnetbands sind, und der Hohlraum (2) tief genug ist, um den Magnet (3) vollständig aufzunehmen, **dadurch gekennzeichnet, dass** der Magnet (3) an der Vorrichtung (1) und die Vorrichtung (1) an dem Magnetband (5) durch ein Befestigungselement (4) angebracht ist, wobei eine Spalte zwischen den Oberseiten des Magneten (3) und dem Befestigungselement (4) davon, und der Oberseite der Vorrichtung (1) so gelassen wird, dass der Magnet (3) und das Befestigungselement (4) nicht in Kontakt mit einer Metalloberfläche, auf der sich die Vorrichtung bewegt, kommen können, und dadurch, dass mindestens die Kanten (6) der Vorrichtung (1), die senkrecht zu der Bewegungsrichtung des Magnetbands (5) sind, mit abgerundeten Kanten (7) bereitgestellt sind.

## Revendications

1. Dispositif amélioré (1) pour roue à chenilles avec bande magnétique (5) où un aimant (3) est logé dans une cavité dudit dispositif, dans lequel le dispositif est constitué de matière plastique et comprend des bords (6) qui sont perpendiculaires au sens du mouvement de la bande magnétique et la cavité (2) est assez profonde pour loger complètement l'aimant (3), **caractérisé en ce que** ledit aimant (3) est relié au dispositif (1) et le dispositif (1) à la bande magnétique (5) au moyen d'un élément de liaison (4) laissant un espace entre les surfaces supérieures de l'aimant (3) et l'élément de liaison (4) de celui-ci et la surface supérieure du dispositif (1), de telle façon que l'aimant (3) et l'élément de liaison (4) ne peuvent pas entrer au contact avec une surface métallique sur laquelle le dispositif se déplace, et **en ce que** au moins les bords (6) du dispositif (1) qui sont perpendiculaires au sens du mouvement de la bande magnétique (5) sont pourvus de bords arrondis (7).
